# EUROPEAN PATENT APPLICATION

(11) **EP 2 874 255 A1**
(43) Date of publication of application: **20.05.2015**
(21) Application number: 13816632.7
(22) Date of filing: 11.07.2013
(51) Int. Cl.: H02G 3/04, B60R 16/02

(54) **ELECTRIC-WIRE BINDING STRUCTURE FOR PROTECTOR**

(30) Priority: 13.07.2012 JP 2012157837
(71) Applicant: Yazaki Corporation, Tokyo 108-0073 (JP)
(72) Inventor: KAMIGAICHI Shungo, Hiroshima-shi Hiroshima 732-0045 (JP)
(74) Representative: Grünecker Patent- und Rechtsanwälte PartG mbB
(86) International application number: PCT/JP2013/069033
(87) International publication number: WO 2014/010698

(57) **Abstract**

A protector (11) is equipped with a main body (15) and a lid (17) which are combined together to form a tubular body capable of housing cables (13); a pair of band insertion holes (65a, 65b) formed through the main body (15); a band fastening space (71) which is defined in the main body so as to contain one band insertion hole (65a) and in which to place a buckle (67) of a cable tie (61) with its top position lower than a housing height (D) of the cables (13); and a fastening space closing plate (91) which closes the band fastening space (71) when the lid (17) is attached to the main body (15).

## Description

### Technical Field

The present invention relates to a cables tying structure of a protector.

### Background Art

Wire harness protectors to be attached to a vehicle body panel or the like in a state that they house and protect a vehicular wire harness (cables) are known (refer to Patent document 1).

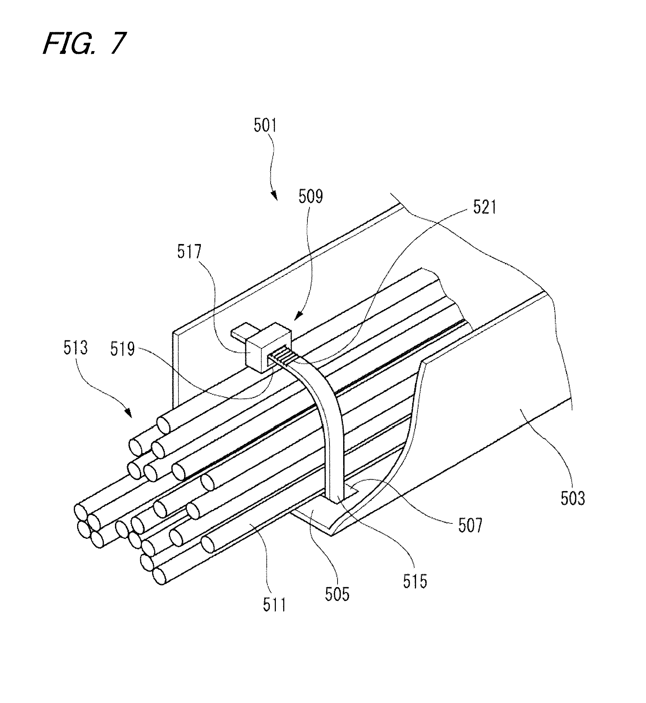

As shown in Fig. 7, in a wire harness protector 501 of this kind, a protector main body 503 is shaped like a gutter and plural insertion holes 507 are formed through an end wall portion 505. A cable tie 509, which assumes a band shape, is inserted into the inside in such a manner that its two end portions are inserted through the respective insertion holes 507. And the cable tie 509 is wound around and thereby holds a wire harness 513 consisting of plural cables 511 provided inside. A band portion 515 is provided with a buckle 517 at one end and a lock hole 519 is formed through the buckle 517. A nail is formed inside the lock hole 519. When the band portion 515 is inserted into the lock hole 519, a portion of a projection-recess structure 521 is engaged with the nail, whereby the band portion 515 is locked.

### Citation List

### Patent Literature

[PTL 1]: JP-A-8-33156

### Summary of Invention

### Technical Problem

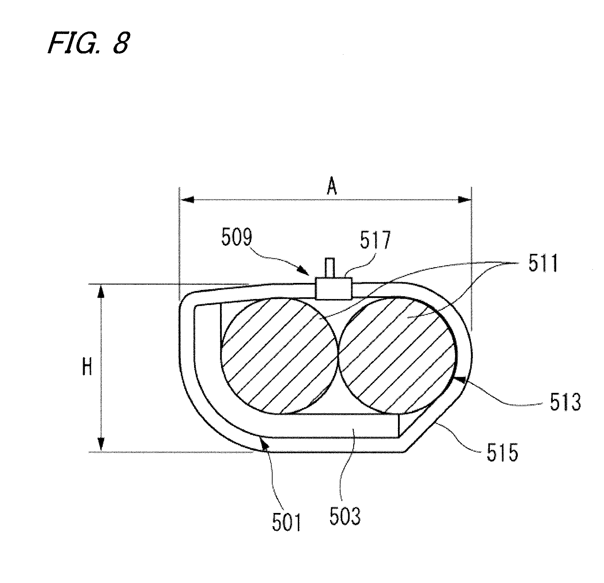

However, the orientation and position of the buckle 517 that are employed when the cables 511 housed in the protector 501 are fixed to the protector main body 503 by means of the cable tie 509 vary depending on workers, resulting in a variation in the quality of the cables protection structure. At protector attachment locations having only a small gap due to a vehicle layout design, the orientation of the buckle 517 of the cable tie 509 needs to be restricted. To this end, for example, attachment work is carried out according to a management item that specifies a range A of placement of the buckle 517 (see Fig. 8). Furthermore, a protector 501 that is attached to a vehicle floor is required to be as small as possible in height dimension H. In this case, attachment work is carried out according to a management item that the buckle 517 should not be placed above cables 511. As a result, workers are obliged to work carefully (i.e., do complicated work) because of, for example, an increased number of management items; the load on workers who attach cables 511 is increased.

The present invention has been made in view of the above circumstances, and an object of the invention is therefore to provide a cables tying structure of a protector which facilitates standard work of placing the buckle of a cable tie within a cables housing height and enables manufacture of a high-quality cable protection structure by simple work.

### Solution to Problem

The above object of the invention is attained by the following configurations:
(1) A cables tying structure of a protector comprising a main body and a lid which are combined together to form a tubular body capable of housing cables; a pair of band insertion holes which are formed through the main body so as to be arranged in a direction that crosses the cables housed; a band fastening space which is defined in the main body so as to contain one of the pair of band insertion holes and in which to place a buckle of a cable tie with its top position lower than a housing height of the cables; and a fastening space closing plate which is formed in the lid and closes the band fastening space when the lid is attached to the main body.

In the cables tying structure of protector having the configuration of item (1), a band tip portion of a cable tie is inserted through one of the pair of band insertion holes that are formed in the main body, from the side of the band fastening space that is defined on the top side of the main body. The band tip portion penetrates through the main body to its back side, and is then pulled up so as to be inserted through the other band insertion hole and return to the top side. The band tip portion, pulled up to the top side and shaped like a loop, of the cable tie surrounds the cables housed in the main body by its inner surface, and is then inserted through the buckle that is provided at the rear end of the cable tie and placed in the band fastening space, whereby the cables are tied to the main body. The cable tie that is now fixed to the main body and ties the cables is placed in the band fastening space in such a manner that the buckle is in contact with the main body with its top position lower than the housing height of the cables.

If the buckle of a cable tie were not properly placed within the band fastening space and projected upward beyond the level of the housing height of the cables, the fastening space closing plate of the lid would interfere with the buckle to disable attachment of the lid. This allows the worker to recognize that the cable tie is not applied regularly. Furthermore, any worker can set the buckle of a cable tie in place in the band fastening space. Thus, the orientation and position of the buckle in cables fixing work are standardized and a quality variation of the cables protection structure can be made small.
(2) A cables tying structure of a protector which is based on the configuration of item (1) and in which the band fastening space is formed so as to have such a size that the buckle and a fastening tip portion of a band fastening tool can be inserted into it.

Where a cable tie is fastened using a band fastening tool, the cables tying structure of a protector having the configuration of item (2) allows the worker to bring a fastening tip portion of the band fastening tool into direct contact with a space bottom surface of the band fastening space. This makes it possible to produce a high-quality cables protection structure by simpler work.

The invention has been described above concisely. The details of the invention will become more apparent when modes for carrying out the invention (hereinafter referred to as an embodiment) described below are read through with reference to the accompanying drawings.

### Brief Description of the Drawings

[Fig. 1] Fig. 1 is a perspective view of a main body of a cables tying structure of a protector according to an embodiment of the present invention.
[Fig. 2] Fig. 2 is a perspective view, as viewed from the back side, of a lid which is attached to the main body shown in Fig. 1.
[Fig. 3] Fig. 3 is a perspective view, as viewed from direction B shown in Fig. 1, of the main body shown in Fig. 1.
[Fig. 4] Fig. 4 is an enlarged perspective view of a band fastening space shown in Fig. 1.
[Fig. 5] Fig. 5 is an enlarged perspective view showing a state that a fastening space closing plate of the lid is placed over the band fastening space shown in Fig. 4.
[Fig. 6] Fig. 6 is a horizontal sectional view of the cables tying structure of a protector according to the embodiment of the invention.
[Fig. 7] Fig. 7 is a perspective view of a conventional cables tying structure of a protector.
[Fig. 8] Fig. 8 is an explanatory diagram illustrating a range of placement of a buckle in a conventional cables tying structure.

### Description of Embodiments

An embodiment of the present invention will be hereinafter described with reference to the drawings.

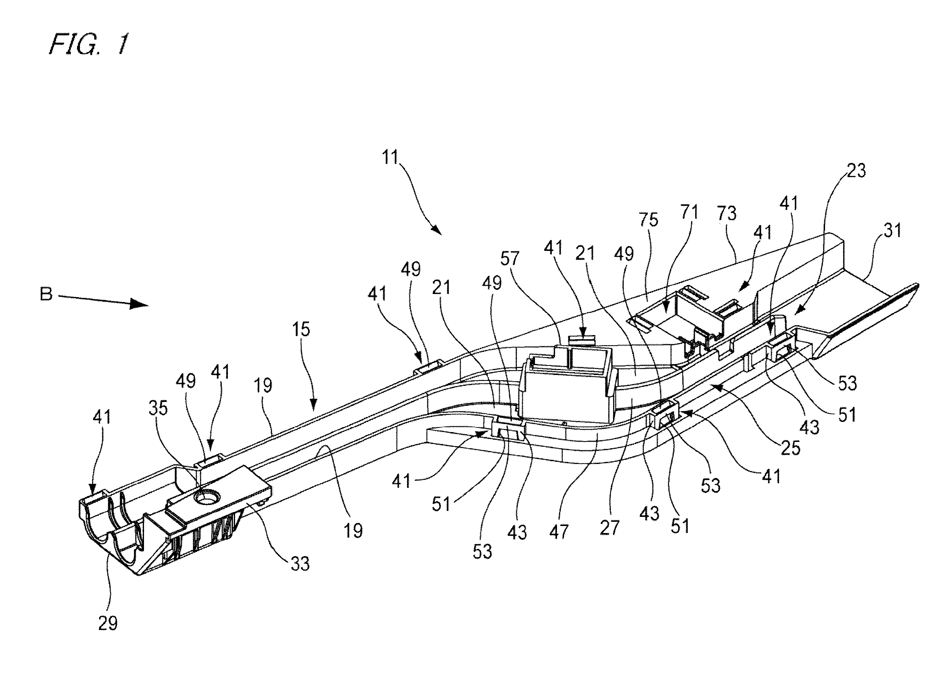

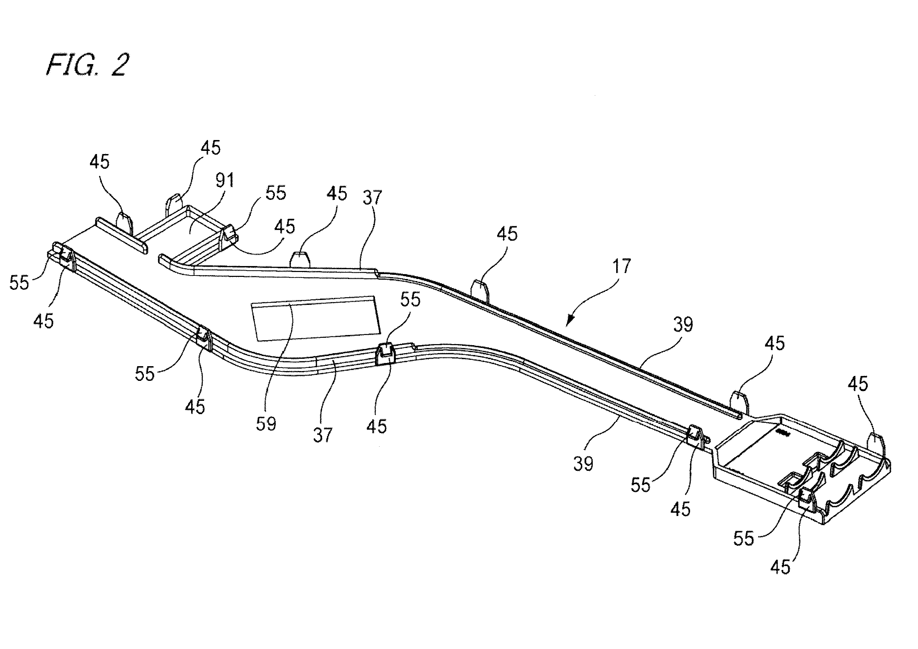

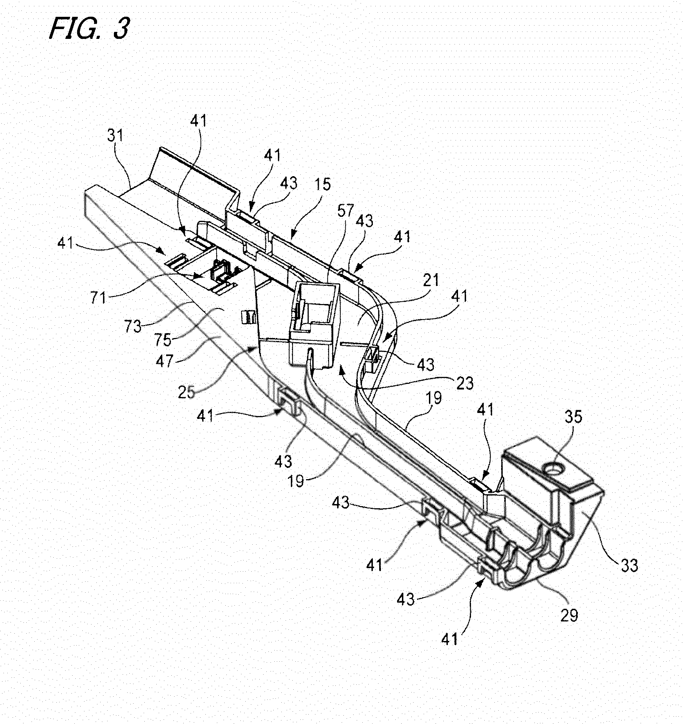

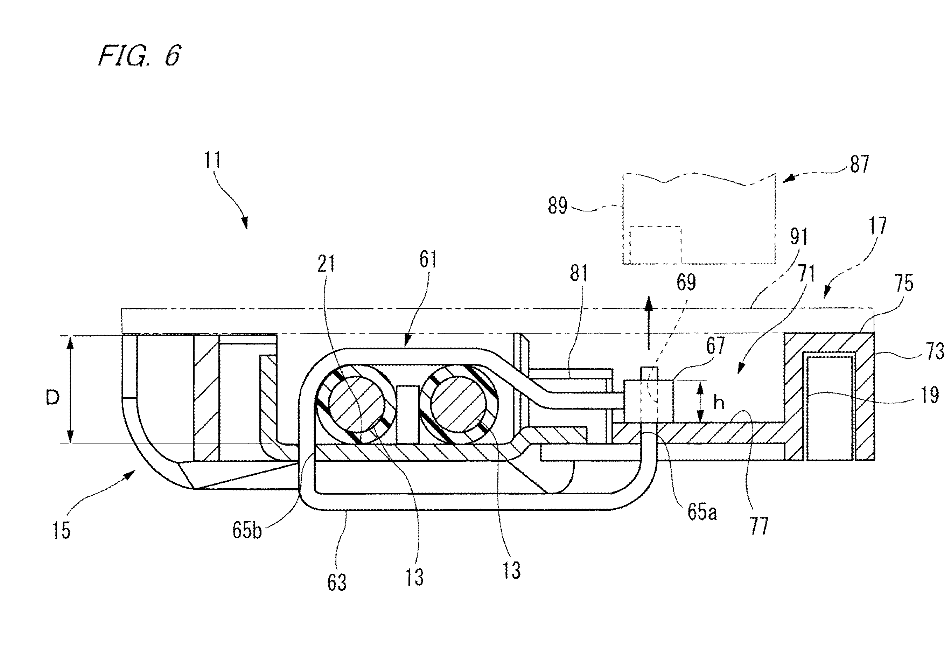

As shown in Figs. 1 and 2, a cables tying structure of a protector 11 according to the embodiment is equipped with a main body 15 and a lid 17 which are combined together to form a tubular body capable of housing cables 13 (see Fig. 6). The main body 15 has two side portions 19 which are spaced from each other with the cables 13 interposed between them. The two side portions 19 are erected from the two respective sides of a long bottom plate 21 which extends along the cables 13. That is, the main body 15 assumes a U shape (open at the top) in a cross section taken perpendicularly to its longitudinal direction. The top open portion is a main body opening 25 which exposes a cables housing space 23 (see Figs. 1 and 3) which is the inside space of the main body 15.

In the embodiment, two cables 13 are housed in the main body 15 (see Fig. 6). A partition wall 27 is erected from the bottom plate 21 at a middle position between the two side portions 19. The partition wall 27 divides the cables housing space 23 into two parts that extend in its longitudinal direction. Although in the embodiment the main body 15 houses the two cables 13, the protector according to the invention may be such as to house one cable 13 or three or more cables 13. A bundle of cables 13 may be housed instead of each cable.

Although the main body 15 is curved in the embodiment, it may assume a straight shape. As shown in Figs. 1 and 3, the main body 15 is formed with a first-end-side cables lead-in/lead-out portion 29 at one end in its longitudinal direction and a second-end-side cables lead-in/lead-out portion 31 at the other end. The main body 15 is provided with a vehicle body fixing bracket 33 outside the first-end-side cables lead-in/lead-out portion 29. A vehicle body fixing lock hole 35 is formed through the vehicle body fixing bracket 33.

The lid 17 has the same plan-view shape as the main body 15 (i.e., it conforms to the main body opening 25). As shown in Fig. 2, the lid 17 is formed, at the two respective sides, with lid flanges 37 which extend along the cables 13. The lid flanges 37 are inserted into the main body 15 inside the two respective side portions 19.

The main body 15 and the lid 17 are provided with plural lock portions 41 which are arranged in their longitudinal directions. The lock portions 41 serve to lock (engage) each of the two side portions 19 of the main body 15 and the corresponding one of two side edges 39 of the lid 17 on (with) each other. The lock portions 41 are arranged at prescribed intervals in the longitudinal directions in the main body 15 and the lid 17. Each lock portion 41 is composed of a receiving portion 43 (an outer side surface 47 of each of the two side portions 19 is formed with receiving portions 43) and a engagement piece 45 (each of the two side edges 39 of the lid 17 is formed with engagement pieces 45).

Each receiving portion 43 projects like a hollow plate from one of the outer side surfaces 47 of the two respective side portions 19. The top surface of the hollow plate shape is formed with a rectangular engagement piece insertion opening 49 (see Fig. 1). Each of the receiving portion 43 has a cut 51 through which its inside is exposed to the outside. The inside of each receiving portion 43 is also exposed to the outside through the engagement piece insertion opening 49. A portion, above the cut 51, of each receiving portion 43 is an engagement beam 53.

The engagement pieces 45 which are provided on the two side edges 39 (which are outside portions of the respective lid flanges 37) of the lid 17 project toward the main body 15. An engagement nail 55 (see Fig. 2) projects from the outer surface of each engagement piece 45. When each engagement piece 45 is inserted through the corresponding engagement piece insertion opening 49, the engagement nail 55 is engaged with the engagement beam 53 (see Fig. 1), whereby the engagement piece 45 is prevented from coming off the receiving portion 43.

A cylinder 57 having a rectangular opening is formed in the main body 15 used in the embodiment approximately at the center in its longitudinal direction so as to divide the partition wall 27. The lid 17 is formed with a rectangular hole 59 which conforms to the cylinder 57. When the lid 17 is attached to the main body 15, the rectangular hole 59 is registered with the cylinder 57 and the inside of the cylinder 57 is exposed to the outside through the rectangular hole 59.

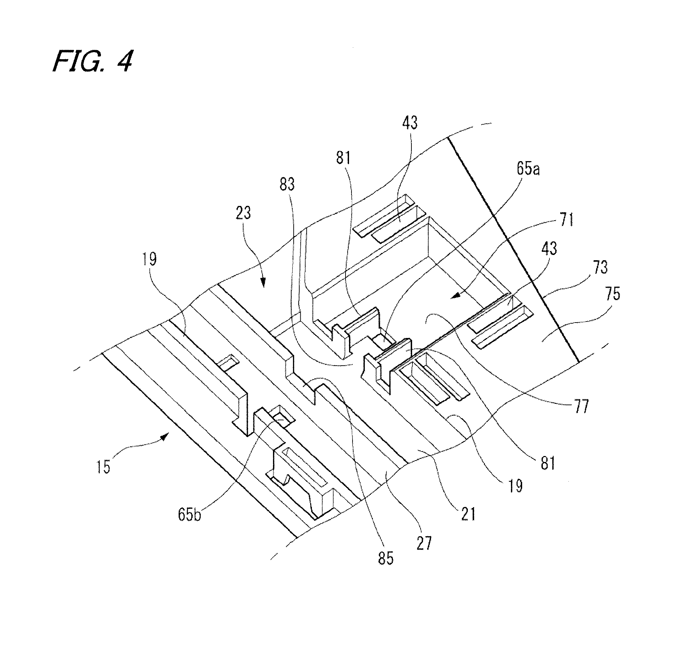

As shown in Fig. 4, a pair of band insertion holes 65a and 65b through which a band portion 63 of a cable tie 61 (see Fig. 6) can be inserted are formed through the bottom plate 21 of the main body 21. As shown in Fig. 6, in the main body 15, the band insertion holes 65a and 65b are arranged in a direction that crosses (in the embodiment, is perpendicular to) the cables 13 housed in the main body 15.

Two end portions of the cable tie 61, which assumes a band shape, are inserted through the band insertion holes 65a and 65b of the main body 15 into its inside. Thus, the cable tie 61 ties the cables 13 provided inside to the main body 15. A rear end portion of the band portion 63 is provided with a buckle 67 and a lock hole 69 is formed through the buckle 67. A nail is formed inside the lock hole 69. When a band tip portion of the band portion 63 is inserted through the lock hole 69, a portion of a projection-recess structure that is formed in the surface of the band portion 63 is engaged with the nail, whereby the band portion 63 is locked.

In the protector 11 according to the embodiment, a band fastening space 71 is defined in the main body 15 so as contain the one band insertion hole 65a. The band fastening space 71 is a space for housing the buckle 67 of the cable tie 61 so that its top is lower than a housing height D (in the embodiment, equal to the height of the cables housing space 23). The second-end-side cables lead-in/lead-out portion 31 (see Fig. 1) of the main body 15 is provided with an elevated stage portion 73 which is elevated from the bottom plate 21 and extends along one of the two side portion 19. An elevated surface 75 of the elevated stage portion 73 is recessed to form the band fastening space 71. As a result, the bottom plate 21 and a space bottom surface 77 of the band fastening space 71 are approximately in the same plane.

The one band insertion hole 65a formed in the band fastening space 71 is interposed between a pair of guide walls 81 (see Fig. 4). The band portion 63 of the cable tie 61 is interposed between the guide walls 81 in the width direction, whereby its movement in the width direction is restricted. The band fastening space 71 communicates with the cables housing space 23 through a side division opening 83 which is formed in the one of the two side portions 19. The partition wall 27 is formed with a recess-like cut 85 at a position in the same portion of a circling path of the cable tie 61 as the side division opening 83 is located. The side division opening 83 and the recess-like cut 85 serve to prevent interference with the band portion 63 which surrounds and ties the cables 13.

In the embodiment, the band fastening space 71 has such a size that the buckle 67 and a fastening tip portion 89 of a band fastening tool 87 can be inserted into it. That is, the band fastening space 71 such a size that the buckle 67 that is mounted on the band fastening tool 87 can be inserted into it together with the fastening tip portion 89 of the band fastening tool 87. The fastening tip portion 89 of the band fastening tool 87 is shaped like a rectangular prism, for example. The band fastening space 71 is formed so as to be approximately similar to and enable insertion of the rectangular-prism-shaped fastening tip portion 89. The band fastening tool 87 may be either a manual fastening tool or a pneumatic fastening tool.

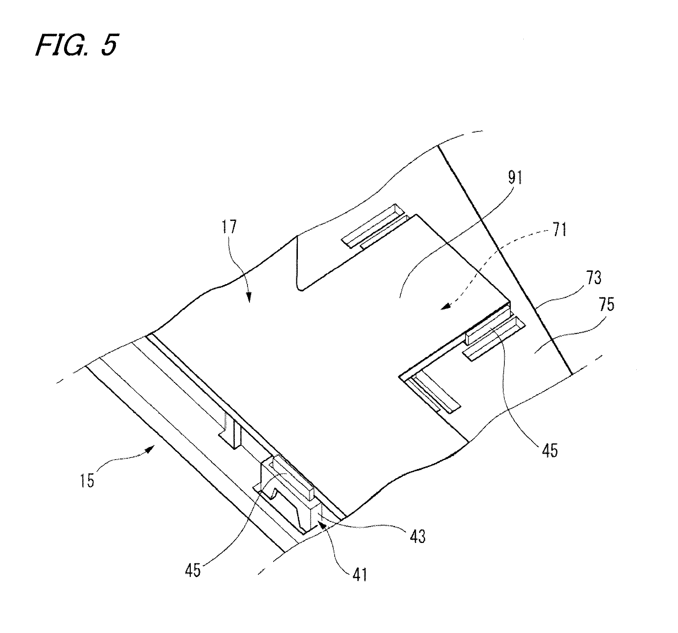

As shown in Fig. 2, a fastening space closing plate 91 projects from the lid 71 which covers the main body opening 25 of the main body 15. The fastening space closing plate 91 assumes a rectangular shape so as to be able to close the band fastening space 71 in which the buckle 67 is housed when the lid 17 is attached to the main body 15. In the embodiment, as shown in Fig. 5, the fastening space closing plate 91 is formed so as to be flush with the lid 17.

Next, a description will be made of how the cables tying structure of the above-configured protector 11 works.

In the cables tying structure of the protector 11 according to the embodiment, a band tip portion of a cable tie 61 is inserted through the one (i.e., band insertion hole 65a) of the pair of band insertion holes 65a and 65b that are formed in the main body 15, from the side of the band fastening space 71 that is defined on the top side of the main body 15. The band tip portion penetrates through the main body 15 to its back side, and is then pulled up so as to be inserted through the other band insertion hole 65b and return to the top side. The band tip portion, pulled up to the top side and shaped like a loop, of the cable tie 61 surrounds the two cables 13 housed in the main body 15 by its inner surface, and is then inserted through the buckle 67 that is provided at the rear end of the cable tie 61 and placed in the band fastening space 71, whereby the cables 13 are tied to the main body 15. As shown in Fig. 6, the cable tie 61 that is now fixed to the main body 15 and ties the cables 13 is placed in the band fastening space 71 in such a manner that the buckle 67 is in contact with the main body 15 with its top position lower than the housing height D of the cables 13. That is, the buckle 67 does not project upward beyond the level of the housing height D of the cables 13 as long as the housing height D of the cables 13 is greater than the height h of the buckle 67.

If the buckle 67 of a cable tie 61 were not properly placed within the band fastening space 71 and projected upward beyond the level of the housing height D of the cables 13, the fastening space closing plate 91, to be attached to the main body 15 so as to be close to the cables 13, of the lid 17 would interfere with the buckle 67 to disable attachment of the lid 17. This allows the worker to recognize that the cable tie 61 is not applied regularly.

Furthermore, any worker can set the buckle 67 of a cable tie 61 in place in the band fastening space 71. Thus, the orientation and position of the buckle 67 in cables fixing work are standardized and a quality variation of the cables protection structure can be made small.

Where a cable tie 61 is fastened using the band fastening tool 87, the cables tying structure of the protector 11 according to the embodiment allows the worker to bring the fastening tip portion 89 (see Fig. 6) of the band fastening tool 87 into direct contact with the space bottom surface 77 of the band fastening space 71. This makes it possible to produce a high-quality cables protection structure by simpler work.

As such, the cables tying structure of the protector 11 according to the embodiment facilitates standard work of placing the buckle 67 of a cable tie 61 within the housing height D of cables 13 even in cases that the protector 11 is attached to a protector attachment location having only a small gap due to a vehicle layout design or a vehicle floor that is required to be as small as possible in height dimension. A high-quality cables protection structure can be produced by simple work.

The features of the above-described cables tying structure of a protector according to the embodiment of the invention will be summarized below concisely.
[1] A cables tying structure of a protector 11 comprising a main body 15 and a lid 17 which are combined together to form a tubular body capable of housing cables 13; a pair of band insertion holes 65a and 65b which are formed through the main body 15 so as to be arranged in a direction that crosses the cables 13 housed; a band fastening space 71 which is defined in the main body 15 so as to contain one band insertion hole 65a and in which to place a buckle 67 of a cable tie 61 with its top position lower than a housing height of the cables 13; and a fastening space closing plate 91 which is formed in the lid 17 and closes the band fastening space 71 when the lid 17 is attached to the main body 15.
[2] The cables tying structure of a protector 11 according to item [1], wherein the band fastening space 71 is formed so as to have such a size that the buckle 67 and a fastening tip portion 89 of a band fastening tool 87 can be inserted into it.

The cables tying structure of a protector according to the invention is not limited to the one according to the above embodiment, and various modifications, improvements, etc. can be made as appropriate. The material, shape, dimensions, related numerical values, form of implementation, number (where plural ones are provided), location, etc. of each constituent element of the embodiment are optional and no limitations are imposed on them as long as the invention can be implemented.

The present application is based on Japanese Patent Application No. 2012-157837 filed on July 13, 2012, the disclosure of which is incorporated herein by reference.

### Industrial Applicability

The cables tying structure of a protector according to the invention facilitates standard work of placing the buckle of a cable tie within a cables housing height and enables manufacture of a high-quality cable protection structure by simple work.

### Reference Signs List

11 ··· Protector
13 ··· Cable
15 ··· Main body
17 ··· Lid
41 ··· Lock portion
61 ··· Cable tie
65a, 65b ··· Band insertion hole
67 ··· Buckle
71 ··· Band fastening space
87 ... Band fastening tool
89 ··· Fastening tip portion
91 ··· Fastening space closing plate

## Claims

1. A cables tying structure of a protector comprising:
a main body and a lid which are combined together to form a tubular body capable of housing cables;
a pair of band insertion holes which are formed through the main body so as to be arranged in a direction that crosses the cables housed;
a band fastening space which is defined in the main body so as to contain one of the pair of band insertion holes and in which to place a buckle of a cable tie with its top position lower than a housing height of the cables; and
a fastening space closing plate which is formed in the lid and closes the band fastening space when the lid is attached to the main body.

2. The cables tying structure of a protector according to claim 1, wherein the band fastening space is formed so as to have such a size that the buckle and a fastening tip portion of a band fastening tool can be inserted into it.
